Europäisches Patentamt

European Patent Office

Office européen des brevets

(11) Veröffentlichungsnummer: **0 265 710 B1**

(12) **EUROPÄISCHE PATENTSCHRIFT**

(45) Veröffentlichungstag der Patentschrift: **12.08.92**

(21) Anmeldenummer: **87114414.3**

(22) Anmeldetag: **02.10.87**

(51) Int. Cl.⁵: **B23Q 3/157**

54 Werkzeugwechsler für programmgesteuerte Universal-Fräs- und Bohrmaschinen.

(30) Priorität: **27.10.86 DE 3636498**

(43) Veröffentlichungstag der Anmeldung:
**04.05.88 Patentblatt 88/18**

(45) Bekanntmachung des Hinweises auf die
Patenterteilung:
**12.08.92 Patentblatt 92/33**

(84) Benannte Vertragsstaaten:
**CH DE FR GB IT LI**

(56) Entgegenhaltungen:
**EP-A- 0 144 912**
**EP-A- 0 175 305**
**EP-A- 0 255 567**
**DE-A- 3 017 613**
**US-A- 4 372 728**

**WERKSTATT UND BETRIEB, Band 105, Nr. 3,
März 1972, Seiten 213-217, München, DE; H.
MÖNKEMÖLLER et al.: "Werkzeugmaschinen
für ein automatisches Fertigungssystem"**

**PATENT ABSTRACTS OF JAPAN, Band 6, Nr.
126 (M-142)[1004], 10. Juli 1982; & JP-A-57 54
044 (HITACHI SEIKO K.K.) 31-03-1982**

**SOVIET INVENTIONS ILLUSTRATED, Woche**

**J47, Sektion General/Mechanical, 12. Januar
1983, Nr. A2303J/47, Derwent Publications
Ltd, London, GB; & SU-A-901 001 (V.F. SOKO-
LOV) 25-06-1980**

(73) Patentinhaber: **MAHO Aktiengesellschaft
Postfach 1280 Tiroler Strasse 85
W-8962 Pfronten(DE)**

(72) Erfinder: **Babel, Werner
Achweg 19
W-8962 Pfronten-Meilingen(DE)**
Erfinder: **Hoppe, Gerd
Rohrbergstrasse 5
W-3501 Habichtswald(DE)**

(74) Vertreter: **Patentanwälte Beetz sen. - Beetz
jun. Timpe - Siegfried - Schmitt-Fumian
Steinsdorfstrasse 10
W-8000 München 22(DE)**

## Beschreibung

Die Erfindung betrifft eine programmgesteuerte Universal-Fräs- und Bohrmaschine mit einem Werkzeugwechsler der im oberbegriff des Patentanspruchs 1 angegebenen Gattüng

Werkzeugwechselsysteme für programmgesteuerte Universal-Fräsmaschinen sowie sog. Bearbeitungszentren sind bereits in verschiedenen Ausführungen bekannt. Sie enthalten regelmäßig eine oder mehrere Greiferzangen, mit denen die Werkzeuge dem meist im hinteren Teil der Maschine angeordneten Magazin entnommen, vor die jeweilige Arbeitsspindel transportiert und in diese selbsttätig eingesetzt werden. Die Abmessungen und die Anordnung des Werkzeugmagazins in bezug auf die beiden Spindelachsen erfordert komplizierte dreidimensionale Bewegungsabläufe der Greiferzangen und ihrer aus einer Vielzahl von einzelnen Bauteilen zusammengesetzten Tragkonstruktion, die nur durch eine entsprechend große Anzahl von gesonderten Antrieben durchgeführt werden können. Dies gilt insbesondere für solche Werkzeugwechsler, die wahlweise die horizontale und die vertikale Arbeitsspindel bedienen. Die relativ große Anzahl von gesondert bewegbaren Bauteilen kompliziert die Steuerung und führt neben den hohen Herstellungskosten zu einem erheblichen Platzbedarf in der unmittelbaren Umgebung der Werkzeugmaschine. Darüber hinaus sind bei derartig komplexen Wechselsystemen in der Regel die Betriebszuverlässigkeit und die Werkzeug-Wechselzeiten unbefriedigend.

Aus "WERKSTATT UND BETRIEB", Bd. 105, Nr. 3,5215,216, ist eine gattüngsgemaße Fräs-und Bohrmaschine mit einer Vertikalspindel bekannt, bei der in den beiden seiten. Wänden des vertikal anständerführungen bewegbaren spindelstocks je ein Querholm axial verschiebbar und verdrehbar gelagert ist. Am freien Ende dieses Querholms ist ein teleskopartiger Tragarm über ein Zwischenstück befestigt, an dessen freiem Ende ein Querarm mit einer Greiferzange verdrehbar montiert ist.

Aufgabe der Erfindung ist es, einen Werkzeugwechsler für programmgesteuerte Universal-Fräs- und Bohrmaschinen zu schaffen, der relativ einfach und aus nur einer geringen Anzahl an bewegbaren Einzelteilen aufgebaut ist und wahlweise die horizontale und die vertikale Arbeitsspindel aus einem Magazin zuverlässig und schnell bedienen kann.

Diese Aufgabe wird erfindungsgemäß durch die im Patentanspruch 1 angegebenen Merkmale gelost.

Der auf dem ständerfesten Querholm sitzende Tragarm führt gleichzeitig eine Verschiebung in der Holmachse und eine Schwenkbewegung um diese aus, und zwar unter der Wirkung eines Linearantriebs, z. B. eines in hohlzylindrischen Querholm angeordneten Hydraulikzylinders. Durch diese beiden gleichzeitig ablaufenden kombinierten Bewegungen wird die Greiferzange in einem Zug unmittelbar vor die Wechselposition des Magazins bzw. vor die zu bedienende Arbeitsspindel gebracht, was innerhalb einer kurzen Zeitspanne von nur wenigen Sekunden erfolgt. Die Führung des Tragarms auf dem Querholm mittels einer Hülse oder Buchse gewährleistet eine sichere und genaue Positionierung des Tragarms in den beiden Endstellungen, die z. B. durch feste Endanschläge bestimmt sind. Die Bauteile des erfindungsgemäßen Werkzeugwechslers sind kostengünstig herzustellen und müssen nur in geringem Maße feinbearbeitet werden. Ferner wird insbesondere durch die nach rückwärts abgewinkelte Ausbildung des Trägers nur ein relativ geringer Freiraum für die Bewegungsabläufe im unmittelbaren Umgebungsbereich der Maschine benötigt.

Bei modernen Universal-Fräs-Maschinen und Bearbeitungszentren ist der Arbeitsraum nach hinten durch Trennwände begrenzt, um die bewegbaren Maschinenteile und insbesondere die Werkzeuge im Magazin vor Verschmutzung durch Späne und Kühlöl zu schützen. Gemäß einer besonders zweckmäßigen Ausgestaltung der Erfindung ist ein Teil dieser Schutzwand als Klappe ausgebildet, die über einen entsprechend ausgelegten Gestänge-Mechanismus von der Halterung der Greifzange bei jedem Werkzeugwechsel geöffnet bzw. geschlossen wird.

Weitere zweckmäßige Ausgestaltungen der Erfindung sind in den Unteransprüchen angegeben.

Im folgenden wird ein Ausführungsbeispiel der Erfindung anhand der Zeichnung im einzelnen beschrieben. Es zeigen:

Fig. 1 in perspektivischer Ansicht einen an eine Universal-Fräsmaschine angebauten Werkzeugwechsler unmittelbar vor der Entnahme eines Werkzeugs aus dem Magazin;

Fig. 2 den Werkzeugwechsler nach Fig. 1 unmittelbar vor dem Einbau eines Werkzeugs in die Horizontalspindel;

Fig. 3 den Werkzeugwechsler nach Fig. 1 unmittelbar vor dem Einbau eines Werkzeugs in die Vertikalspindel;

Fig. 4 den oberen Teil einer Universal-Fräsmaschine in Seitenansicht mit dem Werkzeugwechsler und dem Kettenmagazin im Schnitt IV-IV in Fig. 5;

Fig. 5 die Universal-Fräsmaschine mit dem Werkzeugwechsler in Vorderansicht bzw. im Teilschnitt.

Die dargestellte Universal-Fräsmaschine besitzt einen Ständer 1 mit vorderen Vertikalführungen 2 für eine nicht dargestellte Konsole sowie mit oberen Führungen 3, auf denen ein Spindelstock 4 längsgeführt ist. Im unteren Teil des Spindelstocks 4 befindet sich die horizontale Arbeitsspindel 5. Auf einer schrägen Stirnfläche 6 ist ein Schwenkkopf 7 um eine - nicht dargestellte -45°-Achse verdrehbar und arretierbar gelagert, an dessen vorderer Stirnfläche ein Vertikalkopf 8 mit einer vertikalen Arbeitsspindel 9 montiert ist.

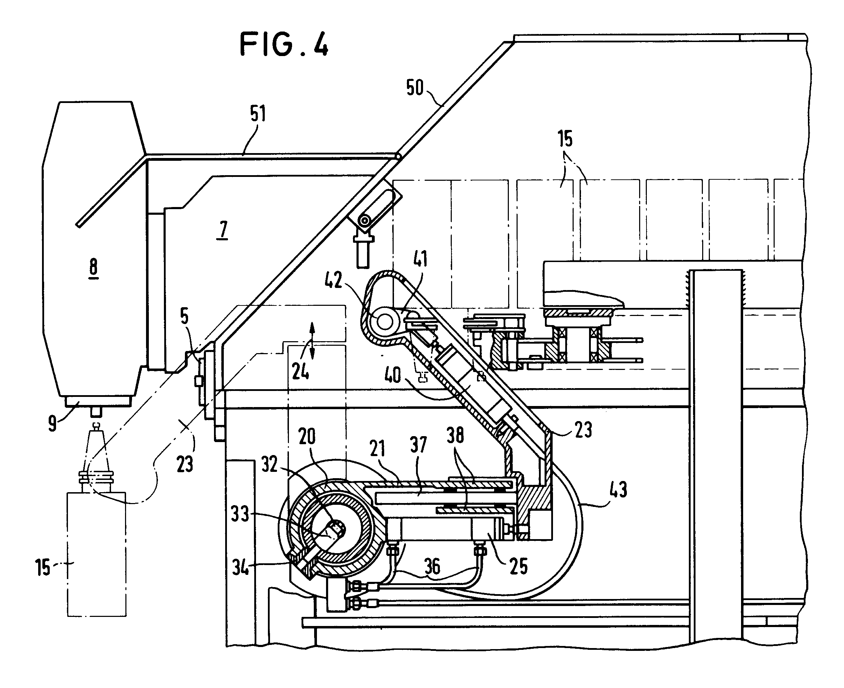

Seitlich neben dem Spindelstock 4 ist ein Kettenmagazin 10 an einem stabilen Traggerüst 11 angeordnet, dessen Gliederkette 12 Werkzeughalter 13 aufweist. In jedem zangenförmigen Werkzeughalter sitzt eine Werkzeugaufnahme 14 mit nach unten weisendem Kegel und nach oben weisendem Werkzeug 15. Die Gliederkette 13 läuft über Kettenräder 16, von denen mindestens eines angetrieben ist und entsprechend dem jeweiligen Arbeitsprogramm die Werkzeuge 15 nacheinander in die vorderste Wechselstellung bringt. Das in dieser Wechselstellung befindliche Werkzeug ist in Fig. 4 durch Punktstrichelung gekennzeichnet.

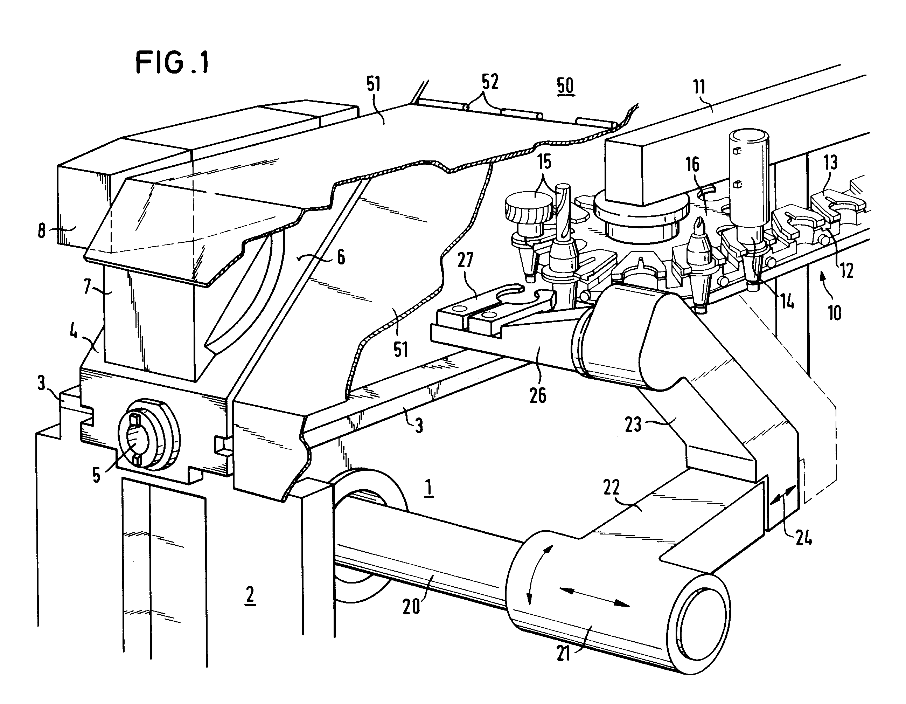

Im vorderen Teil des Ständers 1 ist ein hohlzylindrischer Querholm 20 fest eingebaut, auf dem eine stabile Hülse 21 in Längsrichtung des Querholms 20 verschiebbar und um dessen Achse verdrehbar angeordnet ist. Die Hülse ist fest mit einem stabilen Tragarm 22 von Rechteck-Querschnitt verbunden, an dessen vorderem Ende ein - in Fig. 1 nach rückwärts - abgewinkelter Träger 23 montiert ist. Dieser Träger 23 ist in Richtung der in Fig. 1 dargestellten Pfeile 24 mittels eines in den Tragarm 22 integrierten Hydraulikzylinders 25 (vgl. Fig. 4) in die in Fig. 1 gestrichelt dargestellte Position verschiebbar. Das freie Ende des formsteifen rechteckigen Trägers 23 ist verdickt ausgeführt und trägt an der dem Spindelstock zugewandten Seite einen Querarm 26, an dessen Endabschnitt eine Greiferzange 27 quer montiert ist, so daß - in der Stellung nach Fig. 1 - ihre Längsachse parallel zur Spindelstockachse verläuft und durch die vertikale Mittelachse des in der Wechselposition befindlichen Werkzeughalters 13 geht.

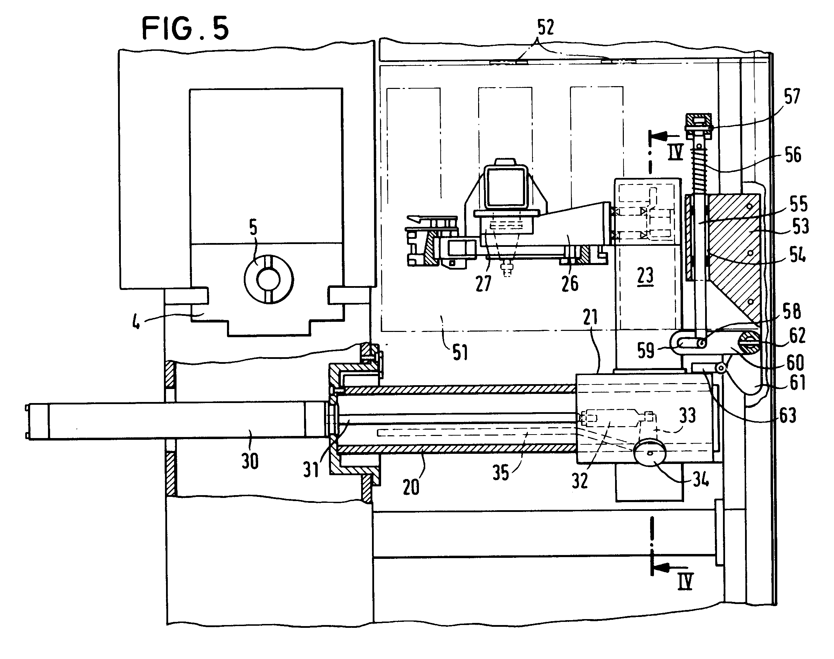

Wie aus der Fig. 5 ersichtlich, ist im Ständer 1 ein Hydraulikzylinder 30 in der Achse des Querholms 20 montiert, an dessen Kolbenstange 31 über ein Zwischenstück 32 ein Querzapfen 33 befestigt ist, der eine als Kurvenbahn ausgeführte Durchbrechung 35 im Querholm 20 durchragt und mit seinem freien Ende an der Buchse 21 des Tragarms 22 z. B. mittels einer Mutter 34 befestigt ist. Der Hydraulikzylinder 30 ist über nicht dargestellte Anschlüsse an eine Druckölleitung angeschlossen, so daß seine Arbeitskammern zu beiden Seiten des Kolbens mit Druckflüssigkeit wechselweise beaufschlagt werden können. Auf diese Weise kann die Kolbenstange 31 mit einer vorgegebenen Kraft ein- und ausgefahren werden, wobei die mit dem Querzapfen 33 verbundene Hülse 21 eine der Form der Kurvenbahn 35 entsprechende Drehbewegung von z. B. 90° und gleichzeitig eine Längsverschiebung ausführt. Zu diesem Zweck ist das Zwischenstück 32 drehbar an der Kolbenstange 31 festgelegt. Zur Minderung der Reibung kann eine Laufrolle auf dem Querzapfen 33 vorgesehen sein, die an der schraubenlinienförmigen Kurvenbahn 35 läuft.

Wie in Fig. 4 gezeigt, ist im unteren Teil des mit der Hülse 21 einstückig ausgeführten Tragarms 22 der Hydraulikzylinder 25 mit Anschlüssen 36 zur Zu- und Ableitung von Druckflüssigkeit angeordnet. Die Kolbenstange des Hydraulikzylinders 25 greift am unteren Teil des nach rückwärts gekröpften Trägers 23 an. Ferner ist an diesem unteren Trägerteil eine Führungsstange 37 befestigt, die in einer Führungsbuchse 38 z. B. mittels Gleitlagern im Tragarm 22 längsgeführt ist. Durch die feste Anordnung des Hydraulikzylinders 25 im Tragarm 22 und durch diese Führungsstange 37 wird der gekröpfte Träger 23 in Richtung des Doppelpfeils 24 in Fig. 1 ohne unerwünschtes Spiel verschoben.

In dem oberen abgebogenen Abschnitt des Trägers 23 ist ein weiterer Hydraulikzylinder 40 installiert, dessen Kolbenstange an einer Kurbel 41 angelenkt ist. Diese Kurbel 41 ist mit einer Endhülse 42 des Querarms 26 fest verbunden, so daß durch Ein- oder Ausfahren der Kolbenstange des Hydraulikzylinders 40 der Querarm 26 zusammen mit der Greiferzange 27 um seine Längsachse verdreht wird. Über eine flexible Leitung 43 erfolgt die Versorgung des Hydraulikzylinders 40 mit Druckflüssigkeit.

Wie dargestellt, ist das seitlich neben dem Spindelstock angeordnete Kettenmagazin 10 zum Arbeitsraum hin durch eine Trennwand 50 geschützt, in welcher eine um horizontale Scharniere 52 schwenkbare Klappe 51 vorgesehen ist. Diese Klappe 51 wird aus ihrer geschlossenen Stellung in die angehobene Stellung - und zurück - durch ein im rechten Teil der Fig. 5 dargestelltes Hebegestänge bewegt, welches durch die Axialverschiebung der Hülse 21 betätigt wird. An der Seitenwand der Schutzkabine bzw. eines Ständers ist eine Konsole 53 befestigt, in deren Ausnehmung 54 eine Schubstange 55 längsverschiebbar geführt ist. Zwischen der Oberfläche der Konsole 53 und einem Gegenhalter an der Schubstange ist eine Druckfeder 56 eingespannt. Das obere Ende der Schubstange 55 ist über ein Gelenk 57 an der Innenfläche der Klappe 51 befestigt. Am unteren Ende der Schubstange 55 befindet sich ein ggf. mit einer Laufrolle versehener Querzapfen 58, der in Langloch 59 eines Schwenkarms 60 aufgenommen ist. Dieser Schwenkhebel 60 ist drehfest mit einem Nocken 61 verbunden und um einen am Ständer der Schutzkabine gelagerten Zapfen 62 verdrehbar. Auf der Hülse 21 sitzt ein Druckstück 63, dessen Laufrolle auf der Kurvenbahn des Nockens 61 abläuft und diesen zusammen mit dem Schwenkarm 60 verschwenkt.

Der vorstehend beschriebene Werkzeugwechsler arbeitet wie folgt:

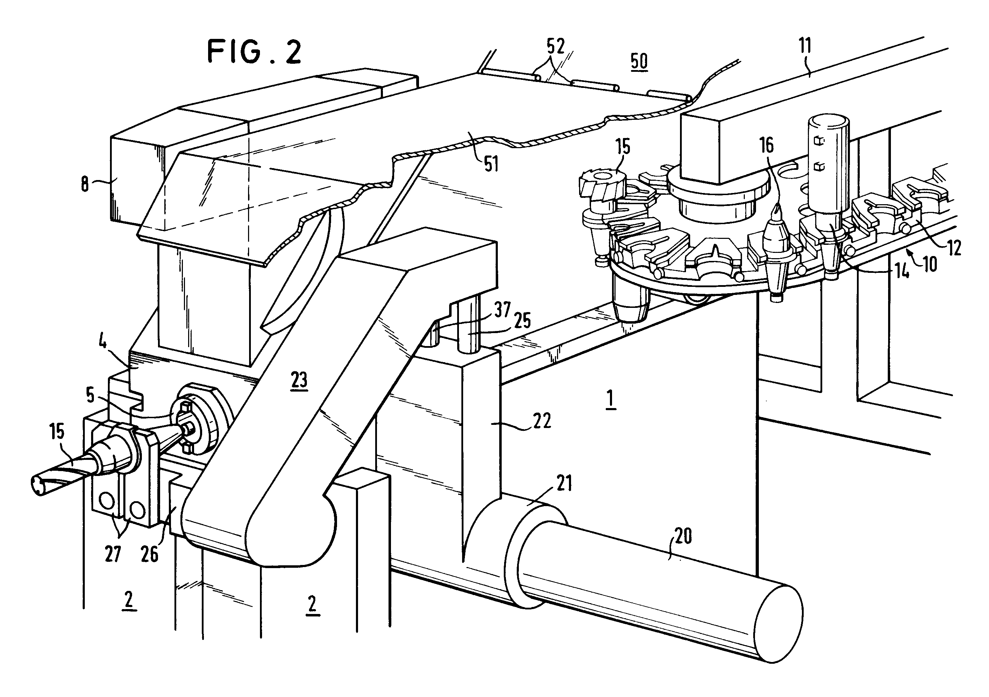

Für einen Wechselvorgang in die Horizontalspindel gemäß Fig. 1 und 2 sei vorausgesetzt, daß der Werkzeugwechsler die in Fig. 1 dargestellte Lage einnimmt und der vertikale Fräskopf 8 in die dargestellte Außerbetriebslage geschwenkt ist. Der Träger 23 wird durch Aktivieren des Hydraulikzylinders 25 in Richtung des Pfeiles 24 in die in Fig. 1 gestrichelt dargestellte Lage vorgeschoben, so daß die mitgenommene Greiferzange 27 den in der Wechselposition des Magazins 10 befindlichen Werkzeughalter des Werkzeugs 15 erfaßt. Durch Zurückfahren des Trägers 23 nach einer gegensinnigen Druckbeaufschlagung des Hydraulikzylinders 25 wird der Werkzeugkegel aus der Magazinhalterung herausgezogen. Bei Verwendung einer mit Federdruck arbeitenden Greiferzange sind für diesen Vorgang keine weiteren Hilfsmittel erforderlich. Die Greiferzange kann auch kraftbetätigte Stellmittel aufweisen, die eine ausreichend weite Öffnung und eine Schließbewegung gewährleisten und deren Aktivierung von der Programmsteuerung der Maschine erfolgt.

Nach dem Zurückfahren des Trägers 23 in die in Fig. 1 dargestellte Position erfolgt eine Einziehbewegung der Kolbenstange 31 in den Hydraulikzylinder 30 und damit eine Axialverschiebung der Hülse 21 auf dem Querholm 20 unter gleichzeitiger Verdrehung der Hülse 21 mit dem Tragarm 22 und dem Träger 23 in die in Fig. 2 dargestellte Position. Zu Beginn der Verschiebebewegung der Hülse 21 wird auch das an ihr befestigte Druckstück 63 (Fig. 5) mitgenommen und durch die Kraft der Feder 56 wird die Schubstange 55 angehoben und der Schwenkhebel 60 zusammen mit den Schaltnocken 61 in eine obere Lage verdreht. Diese Bewegung der Schubstange 55 bewirkt das rechtzeitige Öffnen der Klappe 51 in die in Fig. 2 dargestellte angehobene Lage. Nach Beendigung der Dreh- und Verschiebebewegung der Hülse 21 auf dem Querholm 20 befindet sich das Werkzeug 15 mit dem nach innen weisenden Werkzeugkegel vor der Stirnseite des in seine Ausgangsstellung zurückgefahrenen Spindelstocks 4 jedoch noch unterhalb der Spindelachse. Durch erneute Aktivierung des Hydraulikzylinders 25 wird der Träger 23 in die dargestellte obere Lage ausgefahren, wobei der Hub des Stellzylinders 25 so ausgelegt ist, daß die Achse des Werkzeugs 15 und des Werkzeugkegels mit der Längsachse der Arbeitsspindel 5 zusammenfällt. Daraufhin erfolgt das Einschieben des Werkzeugkegels in die Spindelaufnahmeöffnung der Arbeitsspindel 5 durch Vorfahren des Spindelstocks 4 und Betätigen der spindeleigenen Spannmittel. Durch Einfahren des Hydraulikzylinders 25 wird der Träger 23 mit dem Querarm 26 abgesenkt, und die Greiferzange 27 vom Werkzeughalter abgezogen. Aufgrund einer erneuten Druckmittelbeaufschlagung des Hydraulikzylinders 30 erfolgt eine Zurückführung des Werkzeugwechslers in die in Fig. 1 dargestellte Ausgangsstellung unter gleichzeitiger Betätigung des Nockens 61 und Schließen der Klappe 51. Beim Auswechseln eines Werkzeugs aus der horizontalen Arbeitsspindel 5 und seiner Übergabe in einen Leerplatz des Werkzeugmagazins 10 laufen die vorstehend angegebenen Vorgänge in umgekehrter Folge ab.

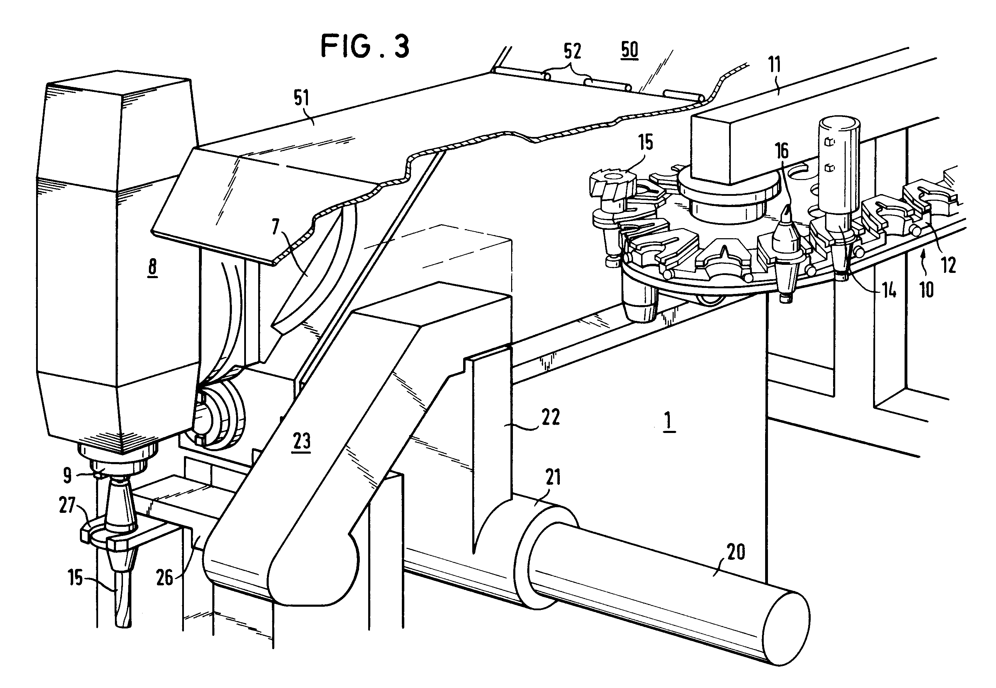

Die Wechselvorgänge zur Bedienung der vertikalen Arbeitsspindel 9 gemäß Fig. 3 entsprechen weitgehend den vorstehend erläuterten Abläufen, wobei jedoch während der Dreh- und Verschiebebewegung der Hülse 21 auf dem Querholm 20 der Querträger 26 durch Betätigen des Hydraulikzylinders 40 um seine Längsachse verdreht wird, so daß das Werkzeug die in Fig. 3 dargestellte vertikale Position nach Beendigung der Verschiebe- und Verdrehbewegung der Hülse 21 einnimmt. Durch Druckbeaufschlagung des Hydraulikzylinders 25 wird der Träger 23 gegenüber dem nunmehr vertikalen Tragarm 22 in die in Fig. 4 gestrichelt dargestellte Lage angehoben, was das Einschieben des Werkzeugkegels in die Aufnahmeöffnung der Vertikalspindel 9 bewirkt. Nach dem Betätigen der spindeleigenen Spannmittel wird die Greiferzange entweder durch Federkraft oder durch eingebaute Stellantriebe so weit geöffnet, daß sie nach Vorfahren des Spindelstocks 4 um eine kleine Strecke seitlich durch die Verschiebebewegung der Hülse 21 auf dem Querholm 20 vom eingespannten Werkzeug 15 freikommt. In der Fortsetzung der Verschiebebewegung der Hülse 21 erfolgt deren Verdrehung und damit die Schwenkbewegung des Tragarms 22 in die Ausgangsstellung nach Fig. 1. Gleichzeitig wird durch gesteuerte Betätigung des Hydraulikzylinders 40 der Querarm 26 mit der Greiferzange 27 in die in Fig. 1 dargestellte Bereitschaftsstellung zurückgedreht.

Alle vorstehend beschriebenen Vorgänge laufen automatisch ab, und zwar entsprechend dem in der Steuerung gespeicherten Bearbeitungsprogramm.

**Patentansprüche**

1. Programmgesteuerte Universal-Fräs- und Bohrmaschine mit einem Werkzeugwechsler, der mindestens eine in mehreren Achsen zwischen einem Werkzeugmagazin (10) und der vertikalen bzw. der horizontalen Arbeitsspindel (5, 9) bewegbare Greiferzange (27) hat, die an einer programmgesteuerten motorisch bewegten Tragkonstruktion befestigt ist und die Werkzeuge (15) aus der Übergabeposition des Werkzeugmagazins zur horizontalen bzw. zur vertikalen Arbeitsspindel überführt, wobei die Tragkonstruktion einen an einer Seitenwand angeordneten Querholm (20) mit einem axial verschiebbaren und in vorgegebenen Grenzen verschwenkbaren Tragarm (22) aufweist, **dadurch gekennzeichnet,** daß am freien Ende des Tragarms (22) quer zu diesem und zum Querholm (20) ein nach rückwärts abgewinkelter Träger (23) drehfest und in Richtung des Tragarms (22) verschiebbar montiert ist, der an der dem Spindelstock zugewandten Seite einen um 90° verdrehbaren Querarm (26) mit der Greiferzange (27) trägt.

2.  Fräs-und Bohrmaschine nach Anspruch 1, dadurch gekennzeichnet, daß der Tragarm (22) mit einer Hülse fest verbunden ist, die auf dem hohlzylindrischen Querholm (20) mittels eines inneren Linearantriebs (30, 31) axial verschiebbar und über eine Drehführung (33, 34) um seine Längsachse gleichzeitig verdrehbar angeordnet ist.

3.  Fräs-und Bohrmachine nach Anspruch 2, dadurch gekennzeichnet, daß am Ende der Kolbenstange (31) des als Hydraulikzylinder (30) ausgebildeten Linearantriebs ein Führungszapfen (33) befestigt ist, der eine schraubenlinienförmige Nut in der Wand des Querholms (20) durchragt und mit der Hülse (21) fest verbunden ist.

4.  Fräs-und Bohrmaschine nach einem der Ansprüche 1 bis 3, dadurch gekennzeichnet, daß der Träger (23) mittels eines am Tragarm (22) achsparallel angeordneten Linearantriebs (25) längsverschiebbar ist.

5.  Fräs-und Bohrmaschine nach einem der Ansprüche 1 bis 4, dadurch gekennzeichnet, daß in dem abgewinkelten Teil des Trägers (23) ein Hydraulikzyinder (40) angeordnet ist, dessen Kolbenstange an einer mit dem längsverdrehbaren Querarm (26) fest verbundenen Kurbel (41) angreift.

6.  Fräs-und Bohrmaschine nach einem der Ansprüche 1 bis 5, dadurch gekennzeichnet, daß eine Schutzabdeckung zwischen dem Arbeitsraum der Maschine und deren hinteren Teilen eine Klappe (51) enthält, die über ein Gestänge (55 bis 63) mit der Hülse (21) gekoppelt und durch deren Verschiebebewegung betätigbar ist.

**Claims**

1.  A program-controlled universal milling and boring machine with a tool changer which has at least one gripper (27) which is movable in a plurality of axes between a tool magazine (10) and the vertical and/or horizontal work spindle (5, 9), the gripper being fixed to a program-controlled, motor-driven support structure and transferring the tools (15) from the transfer position of the tool magazine to the horizontal or vertical work spindle respectively, the support structure having a cross member (20) mounted on one side wall and provided with an axially movable and within preset limits pivotable support arm (22), characterised in that at the free end of the support arm (22), transversely relative to this arm and to the cross member (20), there is mounted a rearwardly angled support (23) which is fixed in respect of rotation and slidable in the direction of the support arm (22), and which supports on the side facing the spindle head a cross arm (26) with the gripper (27), the cross arm being rotatable through 90°.

2.  A milling and boring machine as claimed in claim 1, characterised in that the support arm (22) is rigidly connected to a sleeve which is so mounted on the hollow cylindrical cross member (20) by means of an internal linear drive (30, 31) that it is axially slidable and, by way of a rotary guide (33, 34), at the same time rotatable about its longitudinal axis.

3.  A milling and boring machine as claimed in claim 2, characterised in that on the end of the piston rod (31) of the linear drive, which is in the form of a hydraulic cylinder (30), there is fixed a guide pin (33) which projects through a helical groove in the wall of the cross member (20) and is rigidly connected to the sleeve (21).

4.  A milling and boring machine as claimed in any of the preceding claims, characterised in that the support (23) is longitudinally movable by means of a linear drive (25) mounted on the support arm (22) parallel to the axis.

5.  A milling and boring machine as claimed in any of the preceding claims,
characterised in that
in the angled portion of the support (23) there is mounted a hydraulic cylinder (40) of which the piston rod engages a crank (41) rigidly connected to the longitudinally rotatable cross arm (26).

6. A milling and boring machine as claimed in any of the preceding claims,
characterised in that
a protective covering between the working area of the machine and the rear parts of the machine comprises a flap (51) which is coupled by way of a linkage (55 to 63) to the sleeve (21) and can be operated by the sliding of the sleeve.

**Revendications**

1. Machine à fraiser et aléser universelle à commande à programme, comprenant un changeur d'outil qui présente au moins une pince preneuse (27), laquelle peut se déplacer selon plusieurs axes entre un magasin d'outils (10) et la broche de travail verticale ou la broche de travail horizontale (5, 9), est fixée à une structure porteuse motorisée, à commande par programme, et transfère les outils (15) de la position de transfert du magasin d'outils à la broche de travail horizontale ou verticale, la structure porteuse comprenant une poutre transversale (20) disposée le long d'une paroi latérale et qui comprend un bras porteur (22) qu'on peut faire coulisser axialement et pivoter dans des limites prédéterminées,
caractérisée
en ce qu'à l'extrémité libre du bras porteur (22) est monté, transversalement à ce bras et à la poutre transversale (20), un support (23) coudé vers l'arrière et qui peut coulisser parallèlement à la direction du bras porteur (22), lequel support porte, sur le côté dirigé vers la poupée, un bras transversal (26) qui porte luimême la pince preneuse (27) et peut tourner de 90°.

2. Machine à fraiser et aléser selon la revendication 1,
caractérisée
en ce que le bras porteur (22) est relié rigidement à un manchon qui est monté pour coulisser axialement sur la poutre transversale cylindrique creuse (22) sous l'action d'un dispositif d'entraînement linéaire intérieur (30, 31) et pour pouvoir tourner simultanément autour de son axe longitudinal, sous l'action d'un guide de rotation (33, 34).

3. Machine à fraiser et aléser selon la revendication 2,
caractérisée
en ce qu'à l'extrémité de la tige de piston (31) du dispositif d'entraînement linéaire constitué par un vérin hydraulique (30), est fixé un tourillon de guidage (33) qui traverse une rainure hélicoïdale pratiquée dans la paroi de la poutre transversale (20) et est relié rigidement au manchon (21).

4. Machine à fraiser et aléser selon une des revendications 1 à 3,
caractérisée
en ce que le support (23) peut être déplacé en translation longitudinale au moyen d'un dispositif d'entraînement linéaire (25) monté sur le bras porteur (22) dans une direction parallèle à l'axe.

5. Machine à fraiser et aléser selon une des revendications 1 à 4,
caractérisée
en ce que, dans la partie coudée du support (23), est agencé un vérin hydraulique (40) dont la tige de piston attaque une manivelle (41) rigidement solidaire du bras transversal (26) mobile en rotation par translation longitudinale.

6. Machine à fraiser et aléser selon une des revendications 1 à 5,
caractérisée
en ce qu'un écran protecteur prévu entre l'espace de travail de la machine et les éléments arrière de cette machine comprend un capot (51) qui est accouplé au manchon (21) par l'intermédiaire d'une tringlerie (55 à 63) et peut être actionné par le mouvement de translation de ce manchon.

FIG. 1

EP 0 265 710 B1

FIG. 2

EP 0 265 710 B1

FIG. 3

FIG.4

FIG.5

EP 0 265 710 B1